# EUROPÄISCHE PATENTSCHRIFT

(11) **EP 3 159 166 B1**
(45) Veröffentlichungstag und Bekanntmachung des Hinweises auf die Patenterteilung: **30.01.2019**
(21) Anmeldenummer: 16194091.1
(22) Anmeldetag: 17.10.2016
(51) Int. Cl.: B32B 38/06, B32B 37/10, B32B 23/00, E04F 15/10, A47B 96/20

(54) **DEKORATIVER SCHICHTSTOFF AUS HARZIMPRÄGNIERTEN PAPIERLAGEN UND VERFAHREN ZU DESSEN HERSTELLUNG**
DECORATIVE LAMINATE MADE OF RESIN IMPREGNATED PAPER AND ITS PRODUCTION
LAMINÉ DÉCORATIF COMPRENANT DU PAPIER IMPRÉGNÉ DE RESINE ET SA MÉTHODE DE FABRICATION

(30) Priorität: 22.10.2015 DE 102015118016
(43) Veröffentlichungstag der Anmeldung: 26.04.2017
(73) Patentinhaber: Fritz Egger GmbH & Co. OG, 6380 St. Johann in Tirol (AT)
(72) Erfinder: Monhoff, Klaus, 59759 Arnsberg (DE)
(74) Vertreter: Cohausz & Florack

(56) Entgegenhaltungen:
- WO-A2-2015/140134
- DE-A1- 10 217 919
- DE-U1-202010 006 959
- US-A1- 2006 130 421

## Beschreibung

Die Erfindung betrifft ein Verfahren zum Herstellen von dekorativem Schichtstoff aus harzimprägnierten Papierlagen mittels einer kontinuierlich oder diskontinuierlich arbeitenden Presse, bei dem die Oberfläche des Schichtstoffes mittels eines Strukturgeberbandes, Strukturgeberpapieres oder Pressblechs texturiert wird. Insbesondere betrifft die Erfindung die Verwendung eines Strukturgeberbandes, Strukturgeberpapieres oder Pressblechs zum Herstellen von dekorativem Schichtstoff aus harzimprägnierten Papierlagen mittels einer kontinuierlich oder diskontinuierlich arbeitenden Presse, wobei die Oberfläche des Schichtstoffes mittels des Strukturgeberbandes, Strukturgeberpapieres oder Pressblechs texturiert wird. Des Weiteren betrifft die Erfindung einen dekorativen Schichtstoff aus harzimprägnierten Papierlagen, insbesondere zum Beschichten einer Türplatte, dessen Oberfläche texturiert ist.

Dekorative Schichtstoffe werden aus Zellulosefaserbahnen (Papier) hergestellt, die mit wärmehärtenden Kunstharzen imprägniert sind. Die Zufuhr von Wärme und Druck bewirkt ein Fließen und anschließendes Aushärten der Harze. Durch die Vernetzung der Harze, verstärkt durch die Zellulosefasern der Papiere, entsteht ein sehr dichtes Material mit geschlossener Oberfläche.

Die dekorative Seite des Schichtstoffes ist aus Dekorpapier, das zum Beispiel mit einem Holz- oder Fantasiedekor bedruckt ist, oder aus einer Uni- oder Weißdekorschicht gebildet. Das Flächengewicht des Dekorpapiers liegt üblicherweise zwischen 60 und 130 g/m². Ein weiterer Bestandteil von Schichtstoffen sind kunstharzimprägnierte, insbesondere phenolharzimprägnierte Kraftpapiere. Diese Kraftpapiere werden auch als Kernlagen bezeichnet, da sie im Schichtstoffkern verpresst werden. Das Flächengewicht der Kraftpapiere (z.B. Natronkraftpapiere) liegt üblicherweise im Bereich von 80 bis 300 g/m², wobei hohe Grammaturen vorwiegend für sogenannte Kompaktplatten verwendet werden. Zur Verbesserung der Abriebfestigkeit und zum Schutz des Dekordruckbildes kann auf dem Dekorpapier ein transparentes Papier (sogenanntes Overlay) angeordnet sein, das ein hohes Harzaufnahmevermögen aufweist und in der Regel mit Melaminharz imprägniert ist. Melamin-FormaldehydHarze ergeben transparente und harte Oberflächen. Sie werden üblicherweise auch zur Imprägnierung der Dekorpapiere verwendet. Zwischen dem Dekorpapier und dem Kraftpapier wird gegebenenfalls ein Zwischen- oder Barrierepapier (Underlay) angeordnet, um eine chemische Beeinflussung zwischen den Harzen zu verhindern oder um optische Effekte zu erzielen. Zudem wird auf der dem Dekorpapier abgewandten Seite des Kraftpapiers ein kunstharzimprägniertes Rückseitenpapier angeordnet.

Die Herstellung solcher Schichtstoffe erfolgt in diskontinuierlich oder kontinuierlich arbeitenden Pressen. Die mittels kontinuierlich arbeitender Pressen hergestellten Schichtstoffe werden als "Continuous Pressed Laminates", kurz CPL, bezeichnet, während die mittels diskontinuierlich arbeitender Pressen hergestellten Schichtstoffe als "High Pressure Laminates" oder kurz als "HPL" bezeichnet werden.

HPL-Schichtstoffe werden üblicherweise in Mehretagenpressen mit einem Pressdruck zwischen 50 und 90 bar und Temperaturen von über 120°C hergestellt. Die Etagenpressen haben üblicherweise zwischen 10 und 20 Etagen, wobei jede der Etagen mehrere Schichtstoffstapel bzw. -platten mit einer Nenndicke von 0,5 mm bis 0,8 mm aufnimmt. In Abhängigkeit von der Pressenbeschickung und der maximalen Temperatur dauert der komplette Presszyklus einschließlich Rückkühlung zwischen ca. 20 und 60 Minuten. Die Längen- und Breitenformatierung sowie der Rückseitenschliff von HPL-Schichtstoffen erfolgt in gesonderten Arbeitsschritten.

CPL-Schichtstoffe werden dagegen in kontinuierlich arbeitenden Doppelbandpressen mit einem Pressdruck zwischen z.B. 30 und 70 bar und Temperaturen zwischen 150 °C und 170 °C hergestellt. Abhängig von der Schichtstoffdicke und der Presszonenlänge variiert die Vorschubgeschwindigkeit zwischen 8 und 15 m/min. CPL-Schichtstoff wird nach dem Pressen in der die Presse umfassenden Fertigungslinie sowohl in der Breite geschnitten, auf der Rückseite geschliffen und auf Länge formatiert oder zu einer Rolle aufgewickelt.

Dekorative HPL- oder CPL-Schichtstoffe werden zum Beschichten von Holzwerkstoff- und Kartonwabenplatten, insbesondere von Türplatten, Arbeits- und Tischplatten sowie anderen Möbelplatten verwendet.

Die DE 102 17 919 A1 offenbart eine Presse für Laminat-Paneele mit einem Kern aus Holzwerkstoff und einem mehrlagigen Laminat als obere Oberfläche, das eine Dekorschicht und eine obere, transparente Nutzschicht aufweist. Die Dekorschicht kann dabei aus Papier bestehen, auf das beispielsweise ein Holz- oder Fliesendekor aufgedruckt ist, während die obere transparente Nutzschicht aus Melamin-Harz mit einem Zusatz von Aluminium-Oxid zur Erhöhung der Verschleißfestigkeit bestehen kann. Die Presse umfasst ein Unter- und ein Oberwerkzeug, die mit Pressblechen belegt sind. Um eine natürliche Wirkung des Druckbildes mit Hilfe der Presse zu verstärken, weist das Pressblech Bereiche unterschiedlicher Oberflächenrauigkeit auf, so dass sich an dem hergestellten Laminat-Paneel Bereiche mit unterschiedlichem Glanzgrad ergeben. Die DE 102 17 919 A1 offenbart somit ein Verfahren zum Herstellen von dekorativem Schichtstoff aus harzimprägnierten Papierlagen mittels einer Presse, bei dem die Oberfläche des Schichtstoffs mittels eines Pressblechs texturiert wird, wobei das Pressblech mindestens zwei nebeneinander liegende Flächenbereiche unterschiedlicher Texturierung aufweist.

Der Erfindung liegt die Aufgabe zugrunde, einen Schichtstoff der eingangs genannten Art zu schaffen, der kostengünstig und von vergleichsweise hoher Qualität ist und mit dem die Möglichkeiten, gewünschte Oberflächeneffekte zu erzielen, erweitert werden. Gelöst wird diese Aufgabe durch ein Verfahren mit den in Anspruch 1 angegebenen Merkmalen sowie durch einen Schichtstoff mit den in Anspruch 6 angegebenen Merkmalen. Bevorzugte und vorteilhafte Ausgestaltungen des erfindungsgemäßen Verfahrens und des erfindungsgemäßen Schichtstoffes sind in den auf Anspruch 1 bzw. Anspruch 6 rückbezogenen Ansprüchen angegeben.

Das erfindungsgemäße Verfahren, bei dem die Oberfläche des Schichtstoffes mittels eines Strukturgeberbandes, Strukturgeberpapieres oder Pressblechs texturiert wird, ist dadurch gekennzeichnet, dass das zum Texturieren verwendete Strukturgeberband, Strukturgeberpapier oder Pressblech mindestens zwei längliche, nebeneinander liegende Flächenbereiche (Strukturgeberbereiche) unterschiedlich starker Texturierung aufweist, wobei der stärker texturierte Flächenbereich eine Breite oder durchschnittliche Breite von mindestens 10 cm, vorzugsweise mindestens 15 cm aufweist, und wobei der stärker texturierte Flächenbereich schmaler ist als der weniger stark texturierte Flächenbereich, wobei das zum Texturieren verwendete Strukturgeberband, Strukturgeberpapier oder Pressblech derart ausgebildet ist, dass sich die Flächenbereiche unterschiedlich starker Texturierung als ununterbrochene Streifen über die gesamte Länge oder Breite des Schichtstoffes erstrecken, und wobei zwischen den Flächenbereichen unterschiedlicher Texturierung ein linienförmiges Strukturgeberelement angeordnet ist, welches in der Oberfläche des Schichtstoffes eine die erzeugten, unterschiedlich texturierten Flächenbereiche voneinander abgrenzende Kerbe erzeugt.

Durch die Erfindung wird somit ein dekorativer Schichtstoff aus harzimprägnierten Papierlagen zur Verfügung gestellt, dessen Oberfläche mindestens zwei längliche, nebeneinander liegende Flächenbereiche unterschiedlich starker Texturierung aufweist, wobei der stärker texturierte Flächenbereich eine Breite oder durchschnittliche Breite von mindestens 10 cm, vorzugsweise mindestens 15 cm aufweist, und wobei der stärker texturierte Flächenbereich schmaler ist als der weniger stark texturierte Flächenbereich. Der erfindungsgemäße Schichtstoff kann beispielsweise für die Beschichtung von Türen, insbesondere Innentüren genutzt werden. Die Kerbe imitiert in der durchgängigen Schichtstoffoberfläche eine Fuge oder einen Fügestoß, die bzw. der die unterschiedlich stark strukturierten Flächenbereiche der Schichtstoffoberfläche voneinander optisch deutlicher trennt. Der Betrachter des erfindungsgemäßen Schichtstoffes kann somit den Eindruck gewinnen, dass dieser aus Zuschnitten von unterschiedlich strukturierten Schichtstoffen zusammengesetzt ist.

Vorzugsweise wird das linienförmige Strukturgeberelement so ausgebildet, dass es eine im Querschnitt betrachtet V-förmige Kerbe erzeugt. Ein solches linienförmiges Strukturgeberelement lässt sich relativ schonend in die harzimprägnierten Papierschichten des Schichtstoffes eindrücken. Das linienförmige Strukturgeberelement ist vorzugsweise sehr dünn ausgeführt, um eine entsprechende schmale Kerbe zwischen den unterschiedlich stark strukturierten Flächenbereichen der Schichtstoffoberfläche zu erzeugen. Durch das dünne linienförmige Strukturgeberelement bzw. die damit erzeugte schmale Kerbe wird der optische Gesamteindruck des erfindungsgemäßen Schichtstoffes mehr durch die Kombination der unterschiedlich stark texturierten Flächenbereiche als durch die Kerbe geprägt.

Herkömmliche CPL-Schichtstoffe weisen über ihre gesamte Oberfläche eine einheitliche Struktur auf. Ihre Oberfläche wirkt daher vergleichsweise monoton, insbesondere dann, wenn ihre dekorative Seite aus einer Uni- oder Weißdekorschicht gebildet ist. Dagegen werden mit dem erfindungsgemäßen Schichtstoff die Möglichkeiten, gewünschte Oberflächeneffekte zu erzielen, erheblich erweitert. Beispielsweise lässt sich mit dem erfindungsgemäßen Verfahren ein dekorativer CPL-Schichtstoff realisieren, dessen Oberfläche mindestens zwei stärker texturierte Flächenbereiche aufweist, zwischen denen ein weniger stark texturierter Flächenbereich liegt. Die stärker texturierten Flächenbereiche können dabei parallel zueinander verlaufende Randstreifen des Schichtstoffes bzw. einer damit beschichteten Trägerplatte, z.B. Türplatte, definieren. Hierzu wird in dem erfindungsgemäßen Verfahren ein Strukturgeberband, Strukturgeberpapier oder Pressblech verwendet, welches mindestens zwei stärker texturierte Flächenbereiche aufweist, zwischen denen der weniger stark texturierte Flächenbereich liegt.

Ebenso lässt sich mit dem erfindungsgemäßen Verfahren ein dekorativer CPL-Schichtstoff realisieren, dessen Oberfläche mindestens zwei weniger stark texturierte Flächenbereiche aufweist, zwischen denen der stärker texturierte Flächenbereich liegt. Die weniger stark texturierten Flächenbereiche können dabei wiederum parallel zueinander verlaufende Randstreifen des Schichtstoffes bzw. einer damit beschichteten Trägerplatte, z.B. Türplatte, definieren. Hierzu wird in dem erfindungsgemäßen Verfahren ein Strukturgeberband, Strukturgeberpapier oder Pressblech verwendet, welches mindestens zwei weniger stark texturierte Flächenbereiche aufweist, zwischen denen der stärker texturierte Flächenbereich liegt.

Eine bevorzugte Ausgestaltung des erfindungsgemäßen Verfahrens ist dadurch gekennzeichnet, dass der stärker texturierte Flächenbereich des Strukturgeberbandes, Strukturgeberpapieres oder Pressblechs geeignet ist, auf der Oberfläche des Schichtstoffes eine streifenförmige Texturierung zu erzeugen, die einen Glanzgrad im Bereich von 5 bis 12, vorzugsweise im Bereich von 5 bis 8 Glanzeinheiten, gemessen mit einem Messwinkel von 85° gemäß DIN 67530 oder DIN EN ISO 2813, aufweist. Hierdurch lässt sich eine streifenförmige Texturierung erzielen, die mattglänzend ist bzw. einen relativ matten Glanz besitzt. Auf diese Weise lassen sich die Möglichkeiten, gewünschte Oberflächeneffekte zu erzielen, in besonderem Maße erweitern.

Das bei dem erfindungsgemäßen Verfahren verwendete Strukturgeberband, Strukturgeberpapier oder Pressblech ist nach einer vorteilhaften Ausgestaltung der Erfindung derart ausgebildet, dass sich die damit erzeugten Flächenbereiche unterschiedlich starker Texturierung als ununterbrochene Streifen über die gesamte Länge oder Breite des Schichtstoffes erstrecken. Hierdurch lassen sich verschieden lange oder verschieden breite Schichtstoffformate mit minimalem Verschnitt (Zuschnitt-Abfall) für verschiedenste Anwendungen, z.B. für unterschiedliche Türhöhen oder Türbreiten bereitstellen.

In optischer, haptischer sowie hygienischer Hinsicht ist es günstig, wenn gemäß einer weiteren bevorzugten Ausgestaltung der Erfindung der mindestens eine stärker texturierte Flächenbereich des dekorativen Schichtstoffes eine um mindestens 0,1 µm, vorzugsweise mindestens 1,0 µm, besonders bevorzugt mindestens 5,0 µm größere gemittelte Rauhtiefe aufweist als die gemittelte Rauhtiefe des weniger stark texturierten Flächenbereichs. In diesem Fall lassen sich die unterschiedlich stark texturierten Flächenbereiche des Schichtstoffes gut bis sehr gut optisch und haptisch voneinander unterscheiden, wobei die gemittelte Rauhtiefe des stärker texturierten Flächenbereichs noch relativ gering ist oder sein kann, um diesen Flächenbereich des Schichtstoffes einfach von eventuell anhaftendem Schmutz reinigen zu können.

Die Erfindung liegt insbesondere in der Verwendung eines Strukturgeberbandes oder Strukturgeberpapiers oder Pressbleches zum Herstellen von dekorativem Schichtstoff aus harzimprägnierten Papierlagen nach Anspruch 1 bzw. einem der darauf rückbezogenen Unteransprüche.

Nachfolgend wird die Erfindung anhand einer mehrere Ausführungsbeispiele darstellenden Zeichnung näher erläutert. Es zeigen schematisch:
- Fig. 1: eine Draufsicht auf die Vorder- oder Sichtseite eines erfindungsgemäßen Schichtstoffes;
- Fig. 2: eine Draufsicht auf die Vorder- oder Sichtseite eines weiteren erfindungsgemäßen Schichtstoffes; und
- Fig. 3: eine Draufsicht auf die Vorder- oder Sichtseite eines dritten erfindungsgemäßen Schichtstoffes.

In der Zeichnung sind dekorative Schichtstoffe 1, 1', 1" dargestellt, die zum Beschichten von Trägerplatten, insbesondere von Trägerplatten für Innentüren oder Arbeits- und Tischplatten bestimmt sind. Die Trägerplatten bestehen aus Holzwerkstoffplatten, beispielsweise aus Spanplatten, MDF- oder HDF-Platten, und/oder aus Kartonwabenplatten.

Die Schichtstoffe 1, 1', 1" sind aus Zellulosefaserbahnen (Papier) hergestellt, die mit wärmehärtenden Kunstharzen imprägniert sind. Die dekorative Seite des Schichtstoffes 1, 1', 1" ist aus Dekorpapier gebildet, welches beispielsweise mit einem Holzdekor bedruckt ist. Ebenso kann das Dekorpapier mit einem Fliesendekor, Steindekor oder Fantasiedekor bedruckt oder aus einer Uni- oder Weißdekorschicht gebildet sein.

Des Weiteren umfassen die in der Zeichnung dargestellten Schichtstoffe 1, 1', 1" kunstharzimprägnierte Kraftpapiere, z.B. phenolharzimprägnierte Kraftpapiere, vorzugsweise Natronkraftpapiere, die unterhalb des Dekorpapiers angeordnet sind. Zwischen dem Dekorpapier und dem Kraftpapier ist optional ein Zwischen- oder Barrierepapier (Underlay) angeordnet. Auf der dem Dekorpapier abgewandten Seite des Kraftpapiers ist vorzugsweise ein kunstharzimprägniertes Rückseitenpapier angeordnet.

Zur Erzielung einer hohen Abriebfestigkeit und zum Schutz des Dekordruckbildes ist auf dem Dekorpapier ein transparentes, kunstharzimprägniertes Papier (Overlay) angeordnet.

Die voranstehend genannten kunstharzimprägnierten Papierschichten sind miteinander in einer kontinuierlich arbeiteten Presse, beispielsweise einer Doppelbandpresse, mit einem Pressdruck im Bereich von 30 bis 80 bar und Temperaturen im Bereich von 150 °C und 180 °C zu Schichtstoff gepresst worden, wobei die Oberfläche des Schichtstoffes, hier durch ein Overlay gebildet, zugleich mittels eines Strukturgeberbandes oder Strukturgeberpapieres texturiert wurde.

Die so hergestellten Schichtstoffe 1, 1', 1" sind in der die Presse umfassenden Fertigungslinie in der Breite und auf eine gewünschte Länge zugeschnitten worden. Alternativ können die in der Breite zugeschnittenen, bandförmigen Schichtstoffe zunächst auch zu einer Rolle aufgewickelt und erst später bedarfsgerecht auf Länge formatiert werden. Die in rechteckigem Format vorliegenden Schichtstoffe 1, 1', 1" werden schließlich auf eine Trägerplatte aus Holzwerkstoff und/oder Kartonwabe aufgeklebt.

Erfindungsgemäß ist die Oberfläche (Vorder- oder Sichtseite) des Schichtstoffes 1, 1', 1" mittels eines besonderen Strukturgeberbandes oder Strukturgeberpapieres derart texturiert worden, dass die Oberfläche mindestens zwei längliche, nebeneinander liegende Flächenbereiche 2, 3 unterschiedlich starker Texturierung aufweist. Der stärker texturierte Flächenbereich 2 weist dabei eine (durchschnittliche) Breite von mindestens 10 cm, vorzugsweise mindestens 15 cm auf und ist deutlich schmaler als der weniger stark texturierte Flächenbereich 3. Die Flächenbereiche unterschiedlich starker Texturierung des Strukturgeberbandes oder Strukturgeberpapiers sind als ununterbrochene Streifen, vorzugsweise Längsstreifen, ausgebildet.

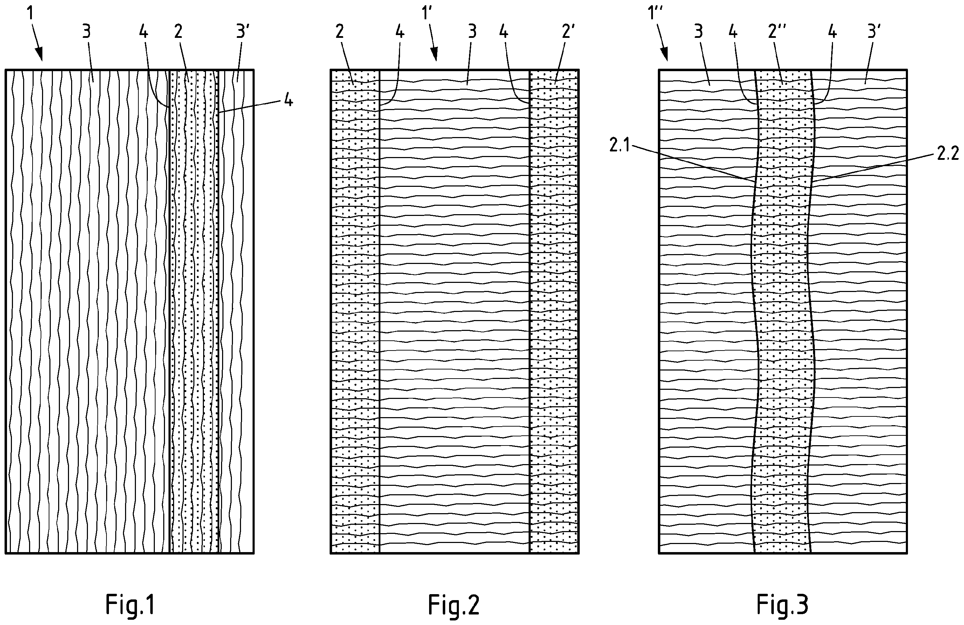

In dem in Fig. 1 gezeigten Beispiel weist der Schichtstoff 1 ein Dekorpapier mit einem aufgedruckten Holzdekor auf, wobei die nachgebildete Maserung bzw. die nachgebildeten länglichen Holzporen in Längsrichtung des rechteckigen Schichtstoffformats verlaufen. Das zur Herstellung des Schichtstoffs gemäß Fig. 1 verwendete Strukturgeberband oder Strukturgeberpapier (nicht gezeigt) hat zwei weniger stark texturierte Flächenbereiche, zwischen denen ein stärker texturierter Flächenbereich (Strukturgeberbereich) liegt. Die beiden weniger stark texturierten Flächenbereiche weisen im Wesentlichen die gleiche mittlere Rauhtiefe auf. Die mittlere Rauhtiefe des stärker texturierten Flächenbereichs ist dagegen so ausgebildet, dass diese um mindestens 0,1 µm, vorzugsweise mindestens 1,0 µm, besonders bevorzugt mindestens 5,0 µm größer ist als die gemittelte Rauhtiefe der weniger stark texturierten Flächenbereiche. Die gemittelte Rauhtiefe des stärker texturierten Flächenbereichs des Strukturgeberbandes oder Strukturgeberpapiers beträgt beispielsweise mindestens 0,2 µm, vorzugsweise mindestens 1,6 µm, besonders bevorzugt mindestens 3,2 µm. Dementsprechend weist die Oberfläche (Sichtseite) des erzeugten Schichtstoffes 1 zwei weniger stark texturierte Flächenbereiche 3, 3' aufweist, zwischen denen der stärker texturierte Flächenbereich 2 liegt.

In dem in Fig. 1 gezeigten Beispiel ist der streifenförmige, stärker texturierte Flächenbereich 2 außermittig bzw. beabstandet zu der Längsmittelachse des Schichtstoffes 1 angeordnet. Es ist allerdings ebenso möglich, den stärker texturierten Flächenbereich 2 im Wesentlichen mittig oder als Randstreifen anzuordnen. Die Breite des stärker texturierten Flächenbereichs 2 des Schichtstoffes beträgt beispielsweise ca. 20 cm.

Zwischen den Flächenbereichen unterschiedlicher Texturierung des Strukturgeberbandes oder Strukturgeberpapiers ist ein linienförmiges Strukturgeberelement ausgebildet, so dass in der Oberfläche des Schichtstoffes 1 eine die erzeugten unterschiedlich texturierten Flächenbereiche 2, 3, 3' voneinander abgrenzende Kerbe 4 erzeugt wird, die im Querschnitt betrachtet vorzugsweise V-förmig ausgebildet ist.

In dem in Fig. 2 gezeigten Beispiel weist der Schichtstoff 1' wiederum ein mit einem Holzdekor aufgedrucktes Dekorpapier auf. Die nachgebildete Maserung bzw. die nachgebildeten länglichen Holzporen verlaufen hier jedoch - im Unterschied zu Fig. 1 - quer zur Längsrichtung des rechteckigen Schichtstoffformats. Das zur Herstellung des Schichtstoffs gemäß Fig. 2 verwendete Strukturgeberband oder Strukturgeberpapier (nicht gezeigt) hat zwei durchgängige, stärker texturierte Flächenbereiche, zwischen denen der weniger stark texturierte Flächenbereich liegt. Dementsprechend weist die Oberfläche (Sichtseite) des erzeugten Schichtstoffes 1' zwei streifenförmige, stärker texturierte Flächenbereiche 2, 2' auf, zwischen denen der weniger stark texturierte Flächenbereich 3 liegt. Die beiden durchgängigen, stärker texturierten Flächenbereiche 2, 2' haben im Wesentlichen die gleiche Breite und bilden die Längsränder des Schichtstoffes. Sie besitzen jeweils eine Breite von ca. 20 cm. Die stärker texturierten Flächenbereiche 2, 2' liegen somit dort, wo bei einer mit dem Schichtstoff 1' beschichteten Haustür oder Innentür der Türgriff angeordnet wird.

In dem in Fig. 3 dargestellten Ausführungsbeispiel weist die Oberfläche (Sichtseite) des Schichtstoffes 1" wiederum oberhalb der Dekorpapierschicht ein transparentes Overlay auf, in welches ein streifenförmiger, stärker texturierter Flächenbereich 2" eingepresst ist. Der stärker texturierte Flächenbereich 2" ist im Wesentlichen mittig angeordnet und erstreckt sich über die gesamte Länge des rechteckigen Schichtstoffformats. Im Unterschied zu den in den in den Figuren 1 und 2 gezeigten Beispielen weist hier der stärker texturierte Flächenbereich 2" gewellte Konturen 2.1, 2.2 auf.

Das zur Herstellung des Schichtstoffs gemäß Fig. 3 verwendete Strukturgeberband oder Strukturgeberpapier (nicht gezeigt) hat dementsprechend einen stärker texturierten Flächenbereich (Strukturgeberbereich), der wellenförmig ausgebildet ist und eine durchschnittliche Breite von ca. 20 cm aufweist.

Auch bei diesem Ausführungsbeispiel sind die Flächenbereiche 3, 3' unterschiedlich starker Texturierung des Schichtstoffes 1" durch eine längliche Kerbe 4 voneinander abgegrenzt. Die Kerbe 4 ist dabei im Querschnitt betrachtet vorzugsweise im Wesentlichen V-förmig ausgebildet.

Der stärker texturierte Flächenbereich 2, 2' oder 2" des Schichtstoffes 1, 1', 1" gemäß den Figuren 1 bis 3 hat einen Glanzgrad im Bereich von 5 bis 12 Glanzeinheiten, vorzugsweise im Bereich von 5 bis 8 Glanzeinheiten, gemessen mit einem Messwinkel von 85° gemäß DIN 67530 oder DIN EN ISO 2813.

Die Ausführung der Erfindung ist nicht auf die in der Zeichnung dargestellten Ausführungsbeispiele beschränkt. Vielmehr sind zahlreiche Varianten denkbar, die auch bei von den gezeigten Beispielen abweichender Gestaltung von der in den beiliegenden Ansprüchen angegebenen Erfindung Gebrauch machen. So kann beispielsweise der mindestens eine stärker texturierte Flächenbereich des zur Herstellung des Schichtstoffes verwendeten Strukturgeberbandes oder Strukturgeberpapiers auch quer zur Laufrichtung der kontinuierlich arbeitenden Presse bzw. quer zur Längsrichtung des erzeugten rechteckigen Schichtstoffformats angeordnet werden.

## Patentansprüche

1. Verfahren zum Herstellen von dekorativem Schichtstoff (1,1',1") aus harzimprägnierten Papierlagen mittels einer kontinuierlich oder diskontinuierlich arbeitenden Presse, bei dem die Oberfläche des Schichtstoffes mittels eines Strukturgeberbandes, Strukturgeberpapieres oder Pressbleches texturiert wird, **dadurch gekennzeichnet, dass** das zum Texturieren verwendete Strukturgeberband, Strukturgeberpapier oder Pressblech mindestens zwei längliche, nebeneinander liegende Flächenbereiche unterschiedlich starker Texturierung aufweist, wobei der stärker texturierte Flächenbereich eine Breite oder durchschnittliche Breite von mindestens 10 cm, vorzugsweise mindestens 15 cm aufweist, und wobei der stärker texturierte Flächenbereich schmaler ist als der weniger stark texturierte Flächenbereich, wobei das zum Texturieren verwendete Strukturgeberband, Strukturgeberpapier oder Pressblech derart ausgebildet ist, dass sich die Flächenbereiche unterschiedlich starker Texturierung als ununterbrochene Streifen über die gesamte Länge oder Breite des Schichtstoffes erstrecken, und wobei zwischen den Flächenbereichen unterschiedlicher Texturierung ein linienförmiges Strukturgeberelement angeordnet ist, welches in der Oberfläche des Schichtstoffes eine die erzeugten unterschiedlich texturierten Flächenbereiche voneinander abgrenzende Kerbe erzeugt.

2. Verfahren nach Anspruch 1, **dadurch gekennzeichnet, dass** das verwendete Strukturgeberband oder Strukturgeberpapier oder Pressblech mindestens zwei stärker texturierte Flächenbereiche aufweist, zwischen denen der weniger stark texturierte Flächenbereich liegt.

3. Verfahren nach Anspruch 1, **dadurch gekennzeichnet, dass** das verwendete Strukturgeberband, Strukturgeberpapier oder Pressblech mindestens zwei weniger stark texturierte Flächenbereiche aufweist, zwischen denen der stärker texturierte Flächenbereich liegt.

4. Verfahren nach einem der Ansprüche 1 bis 3, **dadurch gekennzeichnet, dass** das linienförmige Strukturgeberelement eine im Querschnitt betrachtet V-förmige Kerbe erzeugt.

5. Verfahren nach einem der Ansprüche 1 bis 4, **dadurch gekennzeichnet, dass** der stärker texturierte Flächenbereich des Strukturgeberbandes, Strukturgeberpapieres oder Pressblechs geeignet ist, auf der Oberfläche des Schichtstoffes eine streifenförmige Texturierung zu erzeugen, die einen Glanzgrad im Bereich von 5 bis 12 Glanzeinheiten, vorzugsweise im Bereich von 5 bis 8 Glanzeinheiten, gemessen mit einem Messwinkel von 85° gemäß DIN 67530 oder DIN EN ISO 2813, aufweist.

6. Dekorativer Schichtstoff (1, 1', 1") aus harzimprägnierten Papierlagen, insbesondere zum Beschichten einer Türplatte, dessen Oberfläche texturiert ist, **dadurch gekennzeichnet, dass** die Oberfläche mindestens zwei längliche, nebeneinander liegende Flächenbereiche (2, 3; 2', 3; 2", 3) unterschiedlich starker Texturierung aufweist, wobei der stärker texturierte Flächenbereich (2, 2', 2") eine Breite oder durchschnittliche Breite von mindestens 10 cm, vorzugsweise mindestens 15 cm aufweist, und wobei der stärker texturierte Flächenbereich (2,2', 2") schmaler ist als der weniger stark texturierte Flächenbereich (3), wobei sich die Flächenbereiche (2, 3; 2', 3; 2", 3) unterschiedlich starker Texturierung als ununterbrochene Streifen über die gesamte Länge oder Breite des Schichtstoffes (1, 1', 1") erstrecken, und wobei die Flächenbereiche (2, 3; 2', 3; 2", 3) unterschiedlich starker Texturierung durch eine längliche Kerbe (4) voneinander abgegrenzt sind.

7. Schichtstoff nach Anspruch 6, **dadurch gekennzeichnet, dass** dessen Oberfläche mindestens zwei stärker texturierte Flächenbereiche (2, 2') aufweist, zwischen denen der weniger stark texturierte Flächenbereich (3) liegt.

8. Schichtstoff nach Anspruch 6, **dadurch gekennzeichnet, dass** dessen Oberfläche mindestens zwei weniger stark texturierte Flächenbereiche (3, 3') aufweist, zwischen denen der stärker texturierte Flächenbereich (2; 2") liegt.

9. Schichtstoff nach einem der Ansprüche 6 bis 8, **dadurch gekennzeichnet, dass** die Kerbe (4) im Querschnitt betrachtet V-förmig ausgebildet ist.

10. Schichtstoff nach einem der Ansprüche 6 bis 9, **dadurch gekennzeichnet, dass** der stärker texturierte Flächenbereich (2, 2', 2") einen Glanzgrad im Bereich von 5 bis 12 Glanzeinheiten, vorzugsweise im Bereich von 5 bis 8 Glanzeinheiten, gemessen mit einem Messwinkel von 85° gemäß DIN 67530 oder DIN EN ISO 2813, aufweist.

11. Schichtstoff nach einem der Ansprüche 6 bis 10, **dadurch gekennzeichnet, dass** der stärker texturierte Flächenbereich (2, 2', 2") eine gemittelte Rauhtiefe von mindestens 0,2 µm, vorzugsweise von mindestens 1,6 µm, besonders bevorzugt von mindestens 3,2 µm aufweist.

12. Schichtstoff nach einem der Ansprüche 6 bis 11, **dadurch gekennzeichnet, dass** der stärker texturierte Flächenbereich (2, 2', 2") eine um mindestens 0,1 µm, vorzugsweise mindestens 1,0 µm, besonders bevorzugt mindestens 5,0 µm größere gemittelte Rauhtiefe aufweist als die gemittelte Rauhtiefe des weniger stark texturierten Flächenbereichs (3, 3').

## Claims

1. Method for producing decorative laminate (1, 1', 1") made from resin-impregnated layers of paper by means of a continuously or discontinuously operating press, in which the surface of the laminate is textured by means of a structure-imparting strip, structure-imparting paper or press plate, **characterised in that** the structure-imparting strip, structure-imparting paper or press plate used for the texturing comprises at least two longitudinal surface areas lying next to each other and with different degrees of texturing, wherein the more highly textured surface area has a width or average width of at least 10 cm, preferably of at least 15 cm, and wherein the more highly textured surface area is narrower than the less highly textured surface area, wherein the structure-imparting strip, structure-imparting paper or press plate used for the texturing is configured so that the surface areas with different degrees of texturing extend as continuous strips over the full length or width of the laminate, and wherein between the surface areas with different degrees of texturing a linear structure-imparting element is arranged, which generates in the surface of the laminate a groove delimiting from each other the differently structured surface areas.

2. Method according to Claim 1, **characterised in that** the structure-imparting strip or structure-imparting paper or press plate used has at least two more highly textured surface areas, between which the less highly textured surface area lies.

3. Method according to Claim 1, **characterised in that** the structure-imparting strip, structure-imparting paper or press plate used has at least two less highly textured surface areas, between which the more highly textured surface area lies.

4. Method according to any one of Claims 1 to 3, **characterised in that** the linear structure-imparting element generates a V-shaped groove when viewed in cross-section.

5. Method according to any one of Claims 1 to 4, **characterised in that** the more highly textured surface area of the structure-imparting strip, structure-imparting paper or press plate is suitable for generating on the surface of the laminate a striped texture, having a gloss level in the range 5 to 12 gloss units, preferably in the range 5 to 8 gloss units, measured at a measuring angle of 85° according to DIN 67530 or DIN EN ISO 2813.

6. Decorative laminate (1, 1', 1") made from resin-impregnated paper layers, in particular for lining a door panel, the surface of which is textured, **characterised in that** the surface has at least two longitudinal surface areas (2, 3; 2', 3; 2", 3) lying next to each other and with different degrees of texturing, wherein the more highly textured surface area (2, 2', 2") has a width or average width of at least 10 cm, preferably of at least 15 cm, and wherein the more highly textured surface area (2, 2', 2") is narrower than the less highly textured surface area (3), wherein the surface areas (2, 3; 2', 3; 2", 3) with different degrees of texturing extend as uninterrupted stripes across the full length or width of the laminate (1, 1', 1") and wherein the surface areas (2, 3; 2, 3'; 2", 3) with different degrees of texturing are delimited from one another by a longitudinal groove (4).

7. Laminate according to Claim 6, **characterised in that** its surface has at least two more highly textured surface areas (2, 2'), between which the less highly textured surface area (3) lies.

8. Laminate according to Claim 6, **characterised in that** its surface has at least two less highly textured surface areas (3, 3'), between which the more highly textured surface area (2; 2") lies.

9. Laminate according to any one of Claims 6 to 8, **characterised in that** the groove (4) has a V-shaped configuration when viewed in cross-section.

10. Laminate according to any one of Claims 6 to 9, **characterised in that** the more highly textured surface area (2, 2', 2") has a gloss level in the range 5 to 12 gloss units, preferably in the range 5 to 8 gloss units, measured at a measuring angle of 85° according to DIN 67530 or DIN EN ISO 2813.

11. Laminate according to any one of Claims 6 to 10, **characterised in that** the more highly textured surface area (2, 2', 2") has an average roughness depth of at least 0.2 *µ*m, preferably of at least 1.6 *µ*m, particularly preferably of at least 3.2 *µ*m.

12. Laminate according to any one of Claims 6 to 11, **characterised in that** the more highly textured surface area (2, 2', 2") has an average roughness depth that is at least 0.1 *µ*m, preferably at least 1.0 *µ*m, particularly preferably at least 5.0 *µ*m, greater than the average roughness depth of the less highly textured surface area (3, 3').

## Revendications

1. Procédé de fabrication d'un stratifié décoratif (1, 1', 1") se composant de couches de papier imprégné de résine, ledit procédé étant mis en oeuvre au moyen d'une presse fonctionnant de façon continue ou discontinue et au cours duquel la surface du stratifié est texturée au moyen d'un ruban donnant une structure ou d'un papier donnant une structure, ou bien au moyen d'une plaque de compression, **caractérisé en ce que** le ruban donnant une structure ou le papier donnant une structure, ou bien la plaque de compression, qui est utilisé(e) pour la texturation, présente au moins deux zones de surface allongées de texturations différentes, qui se trouvant l'une à côté de l'autre, où la zone de surface plus fortement texturée présente une largeur ou une largeur moyenne au moins de 10 cm, de préférence au moins de 15 cm, et où la zone de surface plus fortement texturée est plus étroite que la zone de surface moins fortement texturée, où le ruban donnant une structure ou le papier donnant une structure, ou bien la plaque de compression, qui est utilisé(e) pour la texturation, est configuré(e) de manière telle, que les zones de surface à texturations différentes s'étendent sur toute la longueur ou sur toute la largeur du stratifié, comme des bandes ininterrompues, et où un élément en forme de ligne, donnant une structure, est disposé entre les zones de surface à texturation différenciée, lequel élément donnant une structure produit, dans la surface du stratifié, une encoche délimitant, les unes par rapport aux autres, les zones de surface produites en étant texturées de façon différenciée.

2. Procédé selon la revendication 1, **caractérisé en ce que** le ruban donnant une structure ou le papier donnant une structure, ou bien la plaque de compression, qui est utilisé(e), présente au moins deux zones de surface plus fortement texturées, entre lesquelles se trouve la zone de surface moins fortement texturée.

3. Procédé selon la revendication 1, **caractérisé en ce que** le ruban donnant une structure ou le papier donnant une structure, ou bien la plaque de compression, qui est utilisé(e), présente au moins deux zones de surface moins fortement texturées, entre lesquelles se trouve la zone de surface plus fortement texturée.

4. Procédé selon l'une quelconque des revendications 1 à 3, **caractérisé en ce que** l'élément en forme de ligne, donnant une structure, produit une encoche qui, vue en coupe transversale, est en forme de V.

5. Procédé selon l'une quelconque des revendications 1 à 4, **caractérisé en ce que** la zone de surface - plus fortement texturée - du ruban donnant une structure ou du papier donnant une structure, ou bien de la plaque de compression, est appropriée pour produire, sur la surface du stratifié, une texturation en forme de bande, texturation qui présente un degré de brillance se situant dans la plage comprise entre 5 et 12 unités de brillance, de préférence dans la plage comprise entre 5 et 8 unités de brillance, ledit degré de brillance étant mesuré avec un angle de mesure de 85°, conformément à la norme DIN 67530 ou à la norme DIN EN ISO 2813.

6. Stratifié décoratif (1, 1', 1") se composant de couches de papier imprégné de résine, stratifié qui est utilisé en particulier pour le revêtement d'un panneau de porte et dont la surface est texturée, **caractérisé en ce que** la surface présente au moins deux zones de surface allongées de texturations différentes (2, 3 ; 2', 3 ; 2", 3), qui se trouvant l'une à côté de l'autre, où la zone de surface (2, 2', 2") plus fortement texturée présente une largeur ou une largeur moyenne au moins de 10 cm, de préférence au moins de 15 cm, et où la zone de surface (2, 2', 2") plus fortement texturée est plus étroite que la zone de surface (3) moins fortement texturée, où les zones de surface (2, 3 ; 2', 3 ; 2", 3) à texturations différentes s'étendent sur toute la longueur ou sur toute la largeur du stratifié (1, 1', 1"), comme des bandes ininterrompues, et où les zones de surface (2, 3 ; 2', 3 ; 2", 3) à texturations différentes sont délimitées, les unes par rapport aux autres, par une encoche allongée (4).

7. Stratifié selon la revendication 6, **caractérisé en ce que** la surface dudit stratifié présente au moins deux zones de surface (2, 2') plus fortement texturées, zones de surface entre lesquelles se trouve la zone de surface (3) moins fortement texturée.

8. Stratifié selon la revendication 6, **caractérisé en ce que** la surface dudit stratifié présente au moins deux zones de surface (3, 3') moins fortement texturées, zones de surface entre lesquelles se trouve la zone de surface (2 ; 2") plus fortement texturée.

9. Stratifié selon l'une quelconque des revendications 6 à 8, **caractérisé en ce que** l'encoche (4), vue en coupe transversale, est en forme de V.

10. Stratifié selon l'une quelconque des revendications 6 à 9, **caractérisé en ce que** la zone de surface (2, 2', 2") plus fortement texturée présente un degré de brillance se situant dans la plage comprise entre 5 et 12 unités de brillance, de préférence dans la plage comprise entre 5 et 8 unités de brillance, ledit degré de brillance étant mesuré avec un angle de mesure de 85°, conformément à la norme DIN 67530 ou à la norme DIN EN ISO 2813.

11. Stratifié selon l'une quelconque des revendications 6 à 10, **caractérisé en ce que** la zone de surface (2, 2', 2") plus fortement texturée présente une profondeur moyenne de rugosité au moins de 0,2 µm, de préférence au moins de 1,6 µm, de façon particulièrement préférable au moins de 3,2 µm.

12. Stratifié selon l'une quelconque des revendications 6 à 11, **caractérisé en ce que** la zone de surface (2, 2', 2") plus fortement texturée présente une profondeur moyenne de rugosité au moins de 0,1 µm, de préférence au moins de 1,0 µm, de façon particulièrement préférable au moins de 5,0 µm, supérieure à la profondeur moyenne de rugosité de la zone de surface (3, 3') moins fortement texturée.
